# EUROPÄISCHE PATENTANMELDUNG

(11) **EP 2 184 515 A2**
(43) Veröffentlichungstag der Anmeldung: **12.05.2010**
(21) Anmeldenummer: 09170969.1
(22) Anmeldetag: 22.09.2009
(51) Int. Cl.: F16H 57/02, B60S 1/26

(54) **Getriebe**

(30) Priorität: 10.11.2008 DE 102008043612
(71) Anmelder: Robert Bosch GmbH, 70442 Stuttgart (DE)
(72) Erfinder: Reith, Michael, 77815, Buehl-Vimbuch (DE); Albrecht, Gerard, 67690, Hatten (FR)

(57) **Zusammenfassung**

Getriebe mit einem Getriebedeckel und einem drehbaren Zahnrad, wobei eine in Richtung des Zahnrads weisende Seite des Getriebedeckels eine erste elektrische Kontaktfläche und eine zweite elektrische Kontaktfläche aufweist. Die erste elektrische Kontaktfläche ist mit einem Taster verbunden, der bei Betätigung die erste elektrische Kontaktfläche und die zweite elektrische Kontaktfläche kurzschließt. Eine in Richtung des Getriebedeckels weisende Seite des Zahnrads weist eine Erhöhung auf. Der Taster und die Erhöhung sind so ausgebildet, dass die Erhöhung den Taster in einer vorgegebenen Stellung des Zahnrads betätigt.

## Beschreibung

Die Erfindung betrifft ein Getriebe, insbesondere ein Getriebe für einen Scheibenwischerantrieb, sowie einen Scheibenwischerantrieb mit einem Motor und einem Getriebe.

### Stand der Technik

Im Stand der Technik sind zahlreiche Scheibenwischerantriebe mit Getriebe bekannt. Sogenannte Rundläufer-Scheibenwischerantriebe weisen ein Zahnrad auf, das eine kontinuierliche Rotationsbewegung ausführt und über ein Umsetzgetriebe eine Wischerwelle in eine pendelnde Bewegung versetzt. Zur Erkennung einer Parkposition des Zahnrads ist es bekannt, das Zahnrad mit einer elektrisch leitfähigen Kontaktbahn zu versehen. Zwei mit einem Gehäuse des Scheibenwischerantriebs verbundene Kontaktfedern bilden Schleifkontakte mit der leitfähigen Kontaktbahn. In einer festgelegten Parkposition des Zahnrads schließt die Kontaktbahn die beiden Kontaktfedern kurz, was mittels einer mit den Kontaktfedern verbundenen Auswertelektronik erkannt wird.

### Offenbarung der Erfindung

Die Aufgabe der Erfindung besteht darin, ein verbessertes Getriebe bereitzustellen. Diese Aufgabe wird durch ein Getriebe gemäß Anspruch 1 gelöst. Es ist weiter Aufgabe der Erfindung, einen verbesserten Scheibenwischerantrieb bereitzustellen. Diese Aufgabe wird durch einen Scheibenwischerantrieb gemäß Anspruch 7 gelöst. Bevorzugte Weiterbildungen sind in den abhängigen Ansprüchen angegeben.

Ein erfindungsgemäßes Getriebe umfasst einen Getriebedeckel und ein drehbares Zahnrad, wobei eine in Richtung des Zahnrads weisende Seite des Getriebedeckels eine erste elektrische Kontaktfläche und eine zweite elektrische Kontaktfläche aufweist. Dabei ist die erste elektrische Kontaktfläche mit einem Taster verbunden, der bei Betätigung die erste elektrische Kontaktfläche und die zweite elektrische Kontaktfläche kurzschließt. Außerdem weist eine in Richtung des Getriebedeckels weisende Seite des Zahnrads eine Erhöhung auf. Der Taster und die Erhöhung sind so ausgebildet, dass die Erhöhung den Taster in einer vorgegebenen Stellung des Zahnrads betätigt. Vorteilhafterweise benötigt dieses Getriebe keine Kontaktbahn auf dem Zahnrad und nur eine Kontaktfeder. Durch die Teilereduzierung ergibt sich eine Kostenersparnis. Die geringere Anzahl benötigter Bauteile reduziert außerdem den Montageaufwand und verkürzt die Toleranzkette, was eine präzisere Erkennung einer Stellung des Zahnrads erlaubt.

Zweckmäßigerweise ist der Taster als Biegefeder ausgebildet.

Ebenfalls ist es zweckmäßig, die Erhöhung als Nocken auszubilden.

In einer bevorzugten Ausführungsform sind die erste und die zweite Kontaktfläche mit einer Auswertelektronik verbunden, die dazu ausgebildet ist, einen elektrischen Kurzschluss zwischen der ersten und der zweiten Kontaktfläche zu erkennen.

Bevorzugt betätigt die Erhöhung den Taster, wenn sich das Zahnrad in einer Parkstellung befindet.

In einer Ausgestaltung der Erfindung ist das Getriebe zum Antrieb eines Scheibenwischers ausgebildet.

Ein erfindungsgemäßer Scheibenwischerantrieb umfasst einen Motor und ein erfindungsgemäßes Getriebe.

### Kurze Beschreibung der Zeichnungen

Figur 1 zeigt schematisch eine perspektivische Ansicht eines Getriebes.

Figur 2 zeigt schematisch eine Aufsicht auf ein Getriebe.

### Ausführungsformen der Erfindung

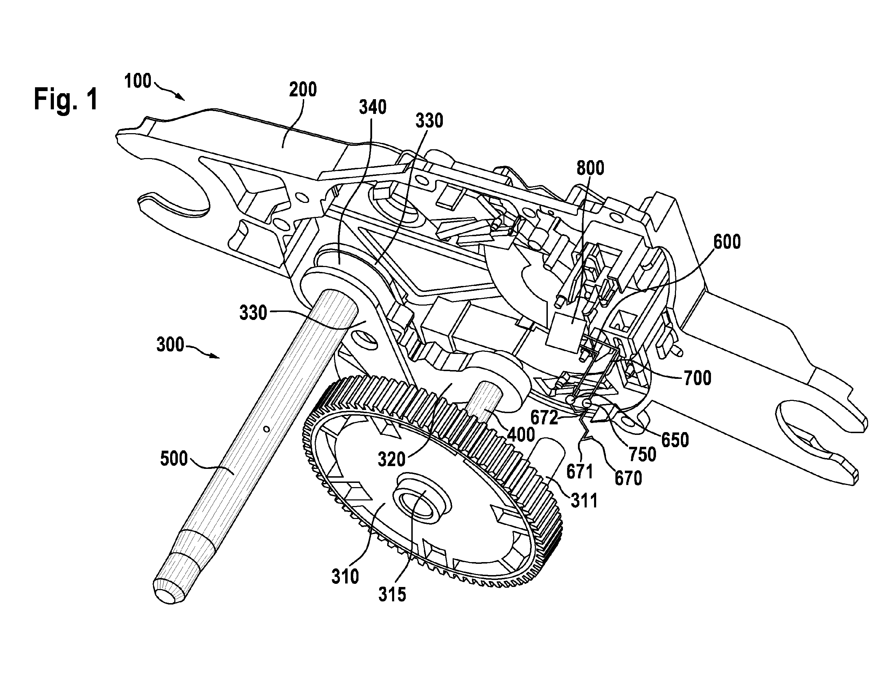

Figur 1 zeigt in einer perspektivischen Darstellung schematisch ein Getriebe 100. Das Getriebe 100 kann beispielsweise als Getriebe in einem Scheibenwischerantrieb, beispielsweise in einem Antrieb eines Heckscheibenwischers dienen.

Das Getriebe 100 weist einen Getriebedeckel 200 auf. Der Getriebedeckel 200 kann aus Metall, Kunststoff oder einem anderen geeigneten Werkstoff gefertigt sein. Das Getriebe 100 umfasst weiter ein Umsetzgetriebe 300. Das Umsetzgetriebe 300 weist ein Zahnrad 310 auf, das von einem nicht dargestellten Motor angetrieben werden kann. Das Zahnrad 310 kann ein Stirnrad, ein Kegelrad, ein Schraubenrad, ein Kronrad, ein Schneckenrad oder ein anderes geeignetes Zahnrad sein. Das Zahnrad 310 kann durch den nicht dargestellten Motor in Rotation um eine Zahnradachse 315 des Zahnrads 310 versetzt werden. Hierfür kann das Zahnrad 310 mit weiteren, nicht dargestellten, Zahnrädern in Verbindung stehen. Das Umsetzgetriebe 300 umfasst außerdem einen Lagerbolzen 400, eine Schubstange 320, zwei Führungsstege 330, einen Ritzel 340 und eine Wischerwelle 500. Das Umsetzgetriebe 300 kann außerdem weitere Zahnräder umfassen.

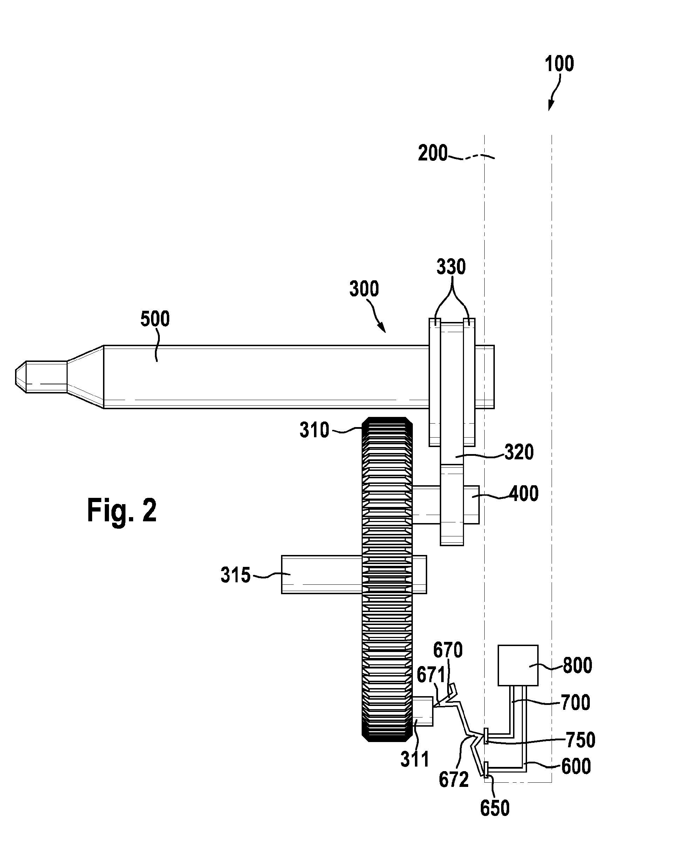

Figur 2 zeigt eine schematische Aufsicht auf das Getriebe 100. Der Lagerbolzen 400 ist senkrecht auf einer dem Getriebedeckel 200 zugewandten Seite des Zahnrads 310 exzentrisch in Bezug auf die Zahnradachse 315 angebracht. Der Lagerbolzen 400 weist also von dem Zahnrad 310 in Richtung des Getriebedeckels 200. Der Lagerbolzen 400 ist gelenkig mit der Schubstange 320 verbunden. Durch eine Drehung des Zahnrads 310 um die Zahnradachse 315 wird die Schubstange 320 über den Lagerbolzen 400 in eine Hub-Pendelbewegung versetzt. Die Schubstange 320 ist an einem Befestigungspunkt gelenkig mit den Führungsstegen 330 verbunden. Alternativ kann auch lediglich ein Führungssteg 330 vorhanden sein.

Die Schubstange 320 umfasst ein Zahnsegment, das mit dem Ritzel 340 im Eingriff steht. Das Ritzel 340 ist verdrehfest mit der Wischerwelle 500 verbunden. Durch die Hub-Pendelbewegung der Schubstange 320 wird das Ritzel 340 in eine Pendeldrehung um die Achse der Wischerwelle 500 versetzt. Durch die verdrehfeste Verbindung zwischen Ritzel 340 und Wischerwelle 500 wird die pendelnde Bewegung des Ritzels 340 auf die Wischerwelle 500 übertragen, so dass diese ebenfalls um die Achse der Wischerwelle 500 pendelt. Durch die Anordnung des Umsetzgetriebes 300 kann eine pendelnde Drehbewegung der Wischerwelle 500 um beispielsweise 180° erreicht werden. Die Wischerwelle 500 ist mit einem in den Figuren 1 und 2 nicht dargestellten Wischarm verbunden, der durch die Pendelbewegung der Wischerwelle 500 angetrieben wird und zum Reinigen einer Scheibe beispielsweise eines Kraftfahrzeugs dient.

Der mit der Wischerwelle 500 verbundene Wischarm kann eine Parkposition aufweisen. Solange der Wischdienst des Wischarms nicht benötigt wird, wird der Wischarm in der Parkposition gehalten. Die Parkposition entspricht einem festgelegten Drehwinkel der Wischerwelle 500, der wiederum mit einer festgelegten Winkelstellung des Zahnrads 310 korrespondiert. Um den Wischerarm in die Parkposition zu bringen, muss der das Zahnrad 310 antreibende Motor also genau dann abgeschaltet werden, wenn sich das Zahnrad 310 in der der Parkposition zugeordneten Winkelstellung befindet.

Hierzu weist der Getriebedeckel 200 eine erste elektrische Kontaktfläche 650 und eine zweite elektrische Kontaktfläche 750 auf. Die erste elektrische Kontaktfläche 650 und die zweite elektrische Kontaktfläche 750 sind, wie in Figur 1 schematisch dargestellt, an einer dem Zahnrad 310 zugewandten Oberfläche des Getriebedeckels 200 angeordnet. Die erste elek-trische Kontaktfläche 650 ist mit einer ersten Leiterbahn 600 verbunden. Die zweite elektrische Kontaktfläche 750 ist mit einer zweiten Leiterbahn 700 verbunden. Die erste Leiterbahn 600 und die zweite Leiterbahn 700 können als Leiterbahnen auf einer Leiterplatte ausgeführt sein. Die erste Leiterbahn 600 und die zweite Leiterbahn 700 können aber auch als Kabel oder eine andere Art von Leiterbahnen ausgeführt sein. Die erste Leiterbahn 600 und die zweite Leiterbahn 700 sind mit einer Auswertelektronik 800 verbunden, die beispielsweise ebenfalls am Getriebedeckel 200 angeordnet sein kann. Falls die erste Leiterbahn 600 und die zweite Leiterbahn 700 als Leiterbahnen einer Leiterplatte ausgeführt sind, so kann die Auswertelektronik 800 auf derselben Leiterplatte vorgesehen sein.

Die erste Kontaktfläche 650 ist elektrisch leitfähig mit einem Taster 670 verbunden. Der Taster 670 kann beispielsweise als Biege- oder Blattfeder ausgebildet sein. Der Taster 670 weist eine Kontaktseite 672 auf, die bei Betätigung des Tasters 670 eine elektrisch leitfähige Verbindung zur zweiten Kontaktfläche 750 herstellt und dadurch die erste Kontaktfläche 650 und die zweite Kontaktfläche 750 elektrisch kurzschließt. Der Taster 670 ist so ausgebildet, dass bei unbetätigtem Taster 670 keine elektrische Verbindung zwischen der ersten elektrischen Kontaktfläche 650 und der zweiten Kontaktfläche 750 besteht. Der Taster 670 weist außerdem eine Bedienseite 671 auf, über die der Taster 670 betätigt werden kann.

Das Zahnrad 310 weist auf seiner dem Getriebedeckel 200 zugewandten Seite eine Erhöhung 311 auf, die beispielsweise als Nocken ausgebildet sein kann. Die Erhöhung 311 ist derart auf dem Zahnrad 310 angeordnet, dass die Erhöhung 311 in einer vorgegebenen Winkelstellung des Zahnrads 310 die Bedienseite 671 des Tasters 670 betätigt. Dadurch werden die erste Kontaktfläche 650 und die zweite Kontaktfläche 750 in einer vorgegebenen Winkelstellung des Zahnrads 310 elektrisch kurzgeschlossen, was mittels der Auswertelektronik 800 erfasst werden kann. In anderen Winkelstellungen des Zahnrads 310 besteht kein elektrischer Kontakt zwischen der ersten Kontaktfläche 650 und der zweiten Kontaktfläche 750.

Die erste Kontaktfläche 650 und die zweite Kontaktfläche 750 sind derart am Getriebedeckel 200 angeordnet, dass der Taster 670 genau dann durch die Erhöhung 311 des Zahnrads 310 betätigt wird, wenn sich das Zahnrad 310 in derjenigen Winkelstellung befindet, in der der mit der Wischerwelle 500 verbundene Wischarm sich in der Parkposition befindet. Soll sich Scheibenwischanlage abgeschaltet werden, so sorgt die Auswertelektronik 800 dafür, dass der das Zahnrad 310 antreibende Motor so lange weiterläuft, bis die erste Kontaktfläche 650 und die zweite Kontaktfläche 750 durch den Taster 670 kurzgeschlossen werden. In diesem Moment schaltet die Auswertelektronik 800 den das Zahnrad 310 antreibenden Motor ab. Der mit der Wischerwelle 500 verbundene Wischarm befindet sich dann in der Parkposition. Die der Parkposition des mit der Wischerwelle 500 verbundenen Wischarms zugeordnete Winkelstellung des Zahnrads 310 kann über die Lage der ersten Kontaktfläche 650 und der zweiten Kontaktfläche 750 auf dem Getriebedeckel 200 angepasst werden.

## Patentansprüche

1. Getriebe (100)
mit einem Getriebedeckel (200) und einem drehbaren Zahnrad (310),
wobei eine in Richtung des Zahnrads (310) weisende Seite des Getriebedeckels (200) eine erste elektrische Kontaktfläche (650) und eine zweite elektrische Kontaktfläche (750) aufweist,
**dadurch gekennzeichnet, dass**
die erste elektrische Kontaktfläche (650) mit einem Taster (670) verbunden ist, der bei Betätigung die erste elektrische Kontaktfläche (650) und die zweite elektrische Kontaktfläche (750) kurzschließt,
eine in Richtung des Getriebedeckels (200) weisende Seite des Zahnrads (300) eine Erhöhung (311) aufweist,
und der Taster (670) und die Erhöhung (311) so ausgebildet sind, dass die Erhöhung (311) den Taster (670) in einer vorgegebenen Stellung des Zahnrads (310) betätigt.

2. Getriebe (100) nach Anspruch 1,
wobei der Taster (670) als Biegefeder ausgebildet ist.

3. Getriebe (100) nach einem der vorhergehenden Ansprüche,
wobei die Erhöhung (311) als Nocken ausgebildet ist.

4. Getriebe (100) nach einem der vorhergehenden Ansprüche,
wobei die erste und die zweite Kontaktfläche (650, 750) mit einer Auswertelektronik (800) verbunden sind, die dazu ausgebildet ist, einen elektrischen Kurzschluss zwischen der ersten und der zweiten Kontaktfläche (650, 750) zu erkennen.

5. Getriebe (100) nach einem der vorhergehenden Ansprüche,
wobei die Erhöhung (311) den Taster (670) betätigt, wenn sich das Zahnrad (310) in einer Parkstellung befindet.

6. Getriebe (100) nach einem der vorhergehenden Ansprüche,
wobei das Getriebe (100) zum Antrieb eines Scheibenwischers ausgebildet ist.

7. Scheibenwischerantrieb
mit einem Motor
und einem Getriebe (100) nach einem der Ansprüche 1 bis 6.
